# EUROPEAN PATENT APPLICATION

(11) **EP 2 832 488 A1**
(43) Date of publication of application: **04.02.2015**
(21) Application number: 13178769.9
(22) Date of filing: 31.07.2013
(51) Int. Cl.: B23K 35/28, B23K 35/30, C22C 5/06, C22C 5/08, C22C 9/04, C22C 9/05, C22C 30/02, C22C 30/06

(54) **Brazing alloys**

(71) Applicant: Umicore AG & Co. KG, 63457 Hanau-Wolfgang (DE)
(72) Inventor: Wiehl, Gunther, 07743 Jena (DE); Kempf, Bernd, 63839 Kleinwallstadt (DE); Schnee, Daniel, 63505 Langenselbold (DE); Starck, Sebastian, 61130 Nidderau-Windecken (DE); Ries, Helmut, D-63526 Erlensee (DE); Thierolf, Steven, 63486 Bruchköbel (DE)

(57) **Abstract**

The present invention relates to novel brazing filler metals comprising copper, silver, zinc, manganese and at least one metal selected from the group indium, gallium and tin.

## Description

Brazing is an important technique for joining components both in series production and for work piece prototyping.

Brazing is an economic procedure, which subjects the materials to low levels of stress, for joining metallic components by means of a metallic additive (the solder), optionally using fluxes and/or inert gas. The melting temperature of the solder is lower than the melting temperatures of the metals which are to be joined and are wetted by the solder without being melted.

Solder materials are classified into soldering filler metals and brazing filler metal depending on the liquidus temperatures thereof, solders having liquidus temperatures of more than 450°C being designated as brazing filler metals and those having liquidus temperatures of less than 450°C being designated as soldering filler metals or soft solders. By way of example, soft solders are used in electronic applications, since excessively high temperatures may damage the components used.

Common brazing filler metals for melting ranges between 600-800°C often are Ag-Cu-Zn brazing filler metals. Such brazing filler metals are described, for example, in standards like DIN EN ISO 17672 and AWS A5.8M/A5.8-2011 (Brazing Filler Metals) and US-A-2019984. Such alloys can be used for several applications, but do not always fulfill all requirements because of higher susceptibility to corrosion and the melting range at a given silver content of the alloys is often desired to be outstanding low.

In addition, modified Ag-Cu-Zn brazing filler metals having a higher silver content also containing Nickel (Ni) and Manganese (Mn) are known as well, and are published for example in DE 19725956. Such brazing filler metals are often used in the tool industry. Nickel is added to increase the strength of the brazed joints as well as to improve wetting behaviour on tool steels. However, this results in an increase of the melting range of the alloys.

EP-A-1078711 discloses Ag-Cu-Zn brazing filler metals that may contain little amounts of gallium, indium, tin or manganese. These alloys, however, often lack mechanical properties like ductility and deformability, still exhibit an increased melting range as well as the disadvantages of brazing materials with high silver content.

The object was therefore to provide a brazing filler metal which is easy to produce, has a low melting point at a given silver content, good deformability at ambient temperature (e.g. for cold rolling or cold wire drawing), and has a sufficient ductility in brazed joints and contains no cadmium to be ecologically harmless.

It is well known in the Art that the Ag content of Ag-Cu-X alloys plays a vital role for the liquidus temperature of the alloy due to the eutectic behavior of the binary Ag-Cu system.

Low melting at a given silver content means that a fixed Ag content e.g. 25% results in a significant lower melting temperature (more than 15°C lower) when compared to the standardized alloy from DIN EN ISO 17672 and AWS A5.8M/A5.8-2011 (Brazing Filler Metals) and US-A-2019984. This improvement in Liquidus Temperature at given Ag content can be achieved by wise selection of the other alloying elements.

The object is solved by the following brazing filler metal that is free from cadmium and phosphorus comprising:
5 weight percent to 49 weight percent silver (Ag)
10 weight percent to 35 weight percent zinc (Zn)
6 weight percent to 19 weight percent manganese (Mn)
0.1 weight percent to 5 weight percent of at least one metal selected from the group consisting of Indium (In), Gallium (Ga), Tin (Sn) and combinations thereof, the balance being copper and unavoidable impurities, with the proviso that if the silver content is from 35 weight percent to 49 weight percent, the manganese content is more than 8 weight percent. The percentages of all components adding up to 100 weight percent.

### Short Description

1. A brazing filler metal that is free from cadmium and phosphorus, aside from unavoidable impurities, comprising copper, from 15.5 weight percent to 49 weight percent silver, from 10 weight percent to 35 weight percent zinc, from 6 weight percent to 19 weight percent manganese, from 0.1 weight percent to 5 weight percent of at least one metal selected from the group consisting of Indium, Gallium, Tin and combinations thereof, the balance being copper and unavoidable impurities, with the proviso that if the silver content is from 35 weight percent to 49 weight percent, the manganese content is more than 8 weight percent.
2. The brazing filler metal of item 1 comprising 15 weight percent to 25 weight percent of zinc.
3. The brazing filler metal of item 1 or 2 comprising 7 weight percent to 15 weight percent of manganese.
4. The brazing filler metal of any of items 1 to 3 comprising 15.5 weight percent to 44 weight percent silver.
5. The brazing filler metal of any of items 1 to 4 comprising from 8 weight percent to 19 weight percent of manganese.
6. The brazing filler metal of any of items 1 to 5 comprising 1 weight percent to 4 weight percent of a metal selected from the group consisting of Indium, Gallium, Tin and combinations thereof.
7. The brazing filler metal of any one of items 1 to 6, comprising from 1 to 3 weight percent of a second and/ or third metal selected from the group consisting of Indium, Gallium, Tin and combinations thereof
8. The brazing filler metal of item 7, the second and/or third metal being contained in an amount of 1 to 2 weight percent.
9. The brazing filler metal of any of items 1 to 8, wherein the unavoidable impurities collectively do not exceed an amount of 0.5 weight percent or 0.3 weight percent.
10. The brazing filler metal of any of items 1 to 9, further comprising a metal of the group consisting of silicon, antimony, palladium, gold, iridium, rhodium, ruthenium, Osmium, platinum, titanium, lithium, germanium, nickel, iron, cobalt or combinations thereof, which metals can optionally be present in an amount of up to 6 weight percent in total of these metals..
11. The brazing filler metal of any of items 1 to 10, containing nickel in an amount of up to 7 weight percent.
12. The brazing filler metal of any of items 1 to 11 containing antimony, titanium, iron, nickel or cobalt in an amount of up to 5 weight percent each.
13. The brazing filler metal of any of items 1 to 12, containing germanium or titanium in an amount of up to 3 weight percent.
14. The brazing filler metal of any of items 1 to 13, containing antimony, germanium, lithium, silicon or cobalt in an amount of up to 2 weight percent.
15. The brazing filler metal of any of items 1 to 14, containing silicon or lithium in an amount of up to 1 weight percent.
16. The brazing filler metal of any of items 1 to 15, containing copper in an amount of from 5 weight percent to 68.4 weight percent.
17. The brazing filler metal of any of items 1 to 16, containing copper in an amount of from 7 weight percent to 61.5 weight percent.
18. The brazing filler metal of any of items 1 to 17, containing copper in an amount of from 21 weight percent to 68.4 weight percent.
19. The brazing filler metal of any of items 1 to 18, containing copper in an amount of from 34.3 weight percent to 52 weight percent.
20. The brazing filler metal of any of items 1 to 19, containing silicon in an amount of from 0.01 weight percent to 2 weight percent, in particular 0.05 weight percent to 1 weight percent.
21. The brazing filler metal of any of items 1 to 20, containing antimony in an amount of from 0.01 weight percent to 5 weight percent, in particular 0.05 weight percent to 2 weight percent.
22. The brazing filler metal of any of items 1 to 21, containing titanium in an amount of from 0.01 weight percent to 5 weight percent, in particular 0.05 weight percent to 3 weight percent.
23. The brazing filler metal of any of items 1 to 22, containing lithium in an amount of from 0.001 weight percent to 2 weight percent, in particular 0.01 weight percent to 1 weight percent.
24. The brazing filler metal of any of items 1 to 23, containing germanium in an amount of from 0.01 weight percent to 3 weight percent, in particular 0.05 weight percent to 2 weight percent.
25. The brazing filler metal of any of items 1 to 24, containing nickel in an amount of from 0.001 weight percent to 7 weight percent, in particular 0.01 weight percent to 5 weight percent.
26. The brazing filler metal of any of items 1 to 25, containing iron in an amount of from 0.001 weight percent to 5 weight percent, in particular 0.01 weight percent to 2 weight percent.
27. The brazing filler metal of any of items 1 to 26, containing cobalt in an amount of from 0.001 weight percent to 5 weight percent, in particular 0.01 weight percent to 2 weight percent.
28. The brazing filler metal of any of items 1 to 27, containing one or more metals selected from the group consisting of palladium, platinum, ruthenium, osmium, gold, iridium, rhodium, and combinations thereof in an amount of up to 1 weight percent, or in an amount of from 0.001 weight percent to 0.5 weight percent, or 0.01 weight percent to 1 weight percent.
29. A sandwich brazing filler metal, comprising a brazing filler metal according to any of the preceding items.
30. A rod or wire of a brazing filler metal of one or more of the preceding items being coated with a flux.
31. Use of the brazing filler metals according to any of the preceding items for brazing parts made of steel, stainless steels, copper and its alloys (i.e. brass) or nickel and its alloys or combinations thereof to a parent material made of steel, stainless steels, copper and its alloys (i.e. brass) or nickel and its alloys or combinations thereof.
32. Use of the brazing filler metals according to any of the preceding items for brazing nickel-chromium, Copper-Chromium alloys, copper or silver composite materials to parent materials made of brass, copper, steel or combinations thereof.
33. Use of the brazing filler metals according to any of the preceding items for brazing hard metals to steel (especially tool steels), hard metals, diamond or combinations thereof.
34. Use of the brazing filler metals according to any of the preceding items for making hard metal saw blades, milling tools, drill bits, contact materials or medical instruments, heat exchangers, or compressors.
35. A combination of a brazing filler metal according to any of the preceding items with a flux.
36. A combination of item 35, wherein the brazing filler metal is in the shape of a wire or rod.
37. A combination of item 35 or 36, wherein the brazing filler metal is coated with a flux.
38. A combination of one or more of items 35 to 37, the flux being selected from FH10, FH11 or FH12 as defined in standard DIN EN 1045.
39. A method for joining metal parts by brazing, comprising the steps of
   - Providing a parent material;
   - Providing a part that is to be connected to the parent material;
   - Arranging the parent material and the part to one another in a way suitable for brazing;
   - Arranging a brazing filler material of any of items 1 to 29 or a combination of any of items 34 to 37 in contact to the parent material, the part or both in a way suitable for brazing;
   - Heat treating the arrangement at a temperature sufficient to effect brazing to obtain a joined part;
   - Cooling the joined part.
40. A brazed article obtainable according to a method of item 39.

### Short description of the figure

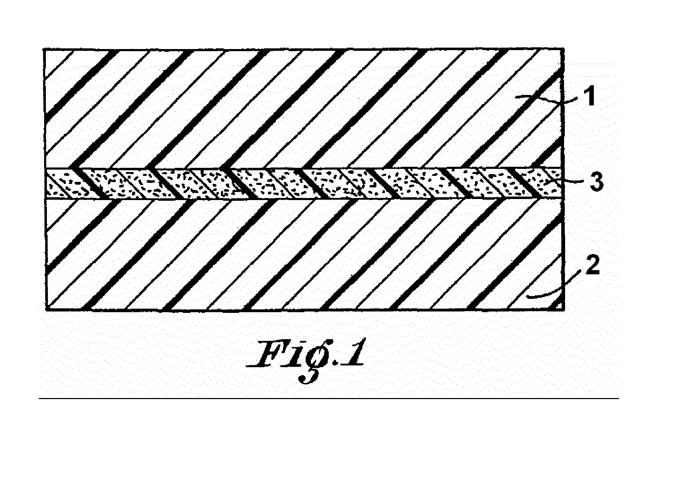

Figure 1 shows a cross section of a sandwich brazing filler exhibiting a metal ribbon 3, a first brazing filler metal 1 and a second brazing filler metal 2 on both sides of the metal ribbon.

### Detailed Description

A content of cadmium and phosphorus is explicitly excluded, aside from unavoidable impurities. Cadmium (Cd) is undesirable in the brazing filler metal due to its toxicity. Phosphorus (P) is not to be used to avoid the formation of brittle intermetallic phases in brazed joints involving iron and iron-based alloys as parent materials. Aluminum can be present as an impurity up to 0.001 weight percent. Phosphorus, magnesium or calcium can be present as impurities up to 0.008 weight percent each. Cadmium, selenium, tellurium, tin, antimony, bismuth and arsenic can be present as impurities up to 0.01 percent by weight each. Lead can be present as an impurity in an amount up to 0.025 weight percent. Sulfur can be present as an impurity as well up to an amount of 0.03 weight percent. Also, silicon and iron can be present as impurities up to 0.05 weight percent each. Unavoidable Impurities can be present in an amount of up to of 0.5 weight percent or 0.3 weight percent or 0.15 weight percent in total.

To avoid misunderstandings, the above alloy composition must contain copper. The copper content normally is 5 weight percent to 68.4 weight percent, or 7 weight percent to 61.5 weight percent, or 21 weight percent to 68.4 weight percent, or 25 weight percent to 55 weight percent or 34.3 weight percent to 52 weight percent.

Silver can also be present in an amount of from 15.5 weight percent to 44 weight percent.

Zinc may also be contained in an amount of from 15 weight percent to 25 weight percent, or in an amount of from 20 weight percent to 25 weight percent.

Manganese can also be present in an amount of from 7 weight percent to 19 weight percent, or from 8 weight percent to 15 weight percent, or from 9 weight percent to 11 weight percent.

The content of the metal(s) selected from the group consisting of indium, gallium, tin and combinations thereof may be 0.1 weight percent to 5 weight percent or 1 weight percent to 4 weight percent. For example, if indium would be present in an amount of 3 weight percent, it would also be possible that gallium is present in an amount of 0.1 weight percent and tin is present in an amount of 1 weight percent. More specifically, if one element is present at an amount of 2 weight percent to 3 weight percent or if two or three of these elements are used, each employed in amounts of 1 weight percent to 2 weight percent have shown to be efficient. Nonetheless, it is also acceptable if the total amount of the metals selected from the group consisting of indium, gallium, tin and combinations thereof does not exceed 5 weight percent.

The brazing filler metal may further comprise a metal of the group consisting of silicon, antimony, palladium, gold, iridium, rhodium, ruthenium, Osmium, platinum, titanium, lithium, germanium, nickel, iron, cobalt or combinations thereof. These metals can optionally be present in an amount of up to 6 weight percent in total of these metals.

The brazing filler metal may optionally comprise nickel in an amount of up to 7 weight percent, or 0.001 weight percent to 7 weight percent, or 0.01 weight percent to 5 weight percent.

The brazing filler metal may optionally comprise titanium in an amount of up to 5 weight percent, or from 0.01 weight percent to 5 weight percent, in particular 0.05 weight percent to 3 weight percent.

The brazing filler metal may optionally comprise antimony in an amount of up to 5 weight percent, or from 0.01 weight percent to 5 weight percent, or 0.05 weight percent to 2 weight percent.

The brazing filler metal may optionally comprise iron in an amount of up to 5 weight percent, or in an amount of from 0.001 weight percent to 5 weight percent, or from 0.01 weight percent to 2 weight percent.

The brazing filler metal may optionally comprise cobalt in an amount of up to 5 weight percent, or in an amount of from 0.001 weight percent to 5 weight percent, or 0.01 weight percent to 2 weight percent.

The brazing filler metal may optionally comprise germanium in an amount of up to 3 weight percent, or in an amount of from 0.01 weight percent to 3 weight percent, or 0.05 weight percent to 2 weight percent.

The brazing filler metal may optionally comprise lithium in an amount of up to 2 weight percent, or in an amount of from 0.001 weight percent to 2 weight percent, or 0.01 weight percent to 1 weight percent.

The brazing filler metal may optionally comprise silicon in an amount of up to 2 weight percent, or in an amount of from 0.01 weight percent to 2 weight percent, or 0.05 weight percent to 1 weight percent.

The brazing filler material may optionally comprise one or more metals selected from the group consisting of palladium, platinum, ruthenium, osmium, gold, iridium, rhodium, and combinations thereof in an amount of up to 1 weight percent, or in an amount of from 0.001 weight percent to 0.5 weight percent, or 0.01 weight percent to 1 weight percent.

Thus, a first specific embodiment relates to a brazing filler metal that is free from cadmium and phosphorus and comprises:
5 weight percent to 49 weight percent silver (Ag)
15 weight percent to 25 weight percent zinc (Zn)
6 weight percent to 19 weight percent manganese (Mn)
0.1 weight percent to 5 weight percent of a metal selected from the group consisting of Indium (In), Gallium (Ga), Tin (Sn) and combinations thereof, the balance being copper and unavoidable impurities, with the proviso that if the silver content is from 35 weight percent to 49 weight percent, the manganese content is more than 8 weight percent, and the percentages of all components adding up to 100 weight percent;
   Or a second specific embodiment relates to a brazing filler metal that is free from cadmium and phosphorus and comprises, aside from unavoidable impurities:
5 weight percent to 49 weight percent silver (Ag)
20 weight percent to 25 weight percent zinc (Zn)
6 weight percent to 19 weight percent manganese (Mn) 0.1 weight percent to 5 weight percent of a metal selected from the group consisting of Indium (In), Gallium (Ga), Tin (Sn) and combinations thereof, the balance being copper and unavoidable impurities, with the proviso that if the silver content is from 35 weight percent to 49 weight percent, the manganese content is more than 8 weight percent, and the percentages of all components adding up to 100 weight percent;
   Or
   a third specific embodiment relates to a brazing filler metal that is free from cadmium and phosphorus and comprises, aside from unavoidable impurities:
5 weight percent to 49 weight percent silver (Ag)
10 weight percent to 35 weight percent zinc (Zn)
9 weight percent to 12 weight percent manganese (Mn) 0.1 weight percent to 5 weight percent of a metal selected from the group consisting of Indium (In), Gallium (Ga), Tin (Sn) and combinations thereof, the balance being copper and unavoidable impurities, and the percentages of all components adding up to 100 weight percent;
   Or
   a fourth specific embodiment relates to a brazing filler metal that is free from cadmium and phosphorus and comprises, aside from unavoidable impurities:
5 weight percent to 49 weight percent silver (Ag)
10 weight percent to 35 weight percent zinc (Zn)
6 weight percent to 19 weight percent manganese (Mn) 1 weight percent to 4 weight percent of a metal selected from the group consisting of Indium (In), Gallium (Ga), Tin (Sn) and combinations thereof, the balance being copper and unavoidable impurities, with the proviso that if the silver content is from 35 weight percent to 49 weight percent, the manganese content is more than 8 weight percent, and the percentages of all components adding up to 100 weight percent;
   Or
   a fifth specific embodiment relates to a brazing filler metal that is free from cadmium and phosphorus and comprises, aside from unavoidable impurities:
5 weight percent to 49 weight percent silver (Ag)
10 weight percent to 35 weight percent zinc (Zn)
6 weight percent to 19 weight percent manganese (Mn) 1 weight percent to 5 weight percent of at least two metals selected from the group consisting of Indium (In), Gallium (Ga) and Tin (Sn), wherein these metals comprised are being present in an amount of from 0.1 weight percent to 2 weight percent or from 1 weight percent to 2 weight percent each;
the balance being copper and unavoidable impurities, with the proviso that if the silver content is from 35 weight percent to 49 weight percent, the manganese content is more than 8 weight percent, and the percentages of all components adding up to 100 weight percent.

In addition, a sixth specific embodiment relates to a brazing filler metal that is free from cadmium and phosphorus and comprises, aside from unavoidable impurities:
5 weight percent to 49 weight percent silver (Ag)
5 weight percent to 68.4 weight percent copper (Cu), which copper content may also be 7 weight percent to 61.5 weight percent, or 21 weight percent to 68.4 weight percent, or 25 weight percent to 55 weight percent.
15 weight percent to 25 weight percent zinc (Zn)
6 weight percent to 19 weight percent manganese (Mn) 0.1 weight percent to 5 weight percent of a metal selected from the group consisting of Indium (In), Gallium (Ga), Tin (Sn) and combinations thereof, and unavoidable impurities, with the proviso that if the silver content is from 35 weight percent to 49 weight percent, the manganese content is more than 8 weight percent, and the percentages of all components adding up to 100 weight percent;
   Or
   a seventh specific embodiment relates to a brazing filler metal that is free from cadmium and phosphorus and comprises, aside from unavoidable impurities:
5 weight percent to 49 weight percent silver (Ag)
5 weight percent to 68.4 weight percent copper (Cu), which copper content may also be 7 weight percent to 61.5 weight percent, or 21 weight percent to 68.4 weight percent, or 25 weight percent to 55 weight percent;
20 weight percent to 25 weight percent zinc (Zn)
6 weight percent to 19 weight percent manganese (Mn) 0.1 weight percent to 5 weight percent of a metal selected from the group consisting of Indium (In), Gallium (Ga), Tin (Sn) and combinations thereof, the balance being copper and unavoidable impurities, with the proviso that if the silver content is from 35 weight percent to 49 weight percent, the manganese content is more than 8 weight percent, and the percentages of all components adding up to 100 weight percent;
   Or
   an eighth specific embodiment relates to a brazing filler metal that is free from cadmium and phosphorus and comprises, aside from unavoidable impurities:
5 weight percent to 49 weight percent silver (Ag)
5 weight percent to 68.4 weight percent copper (Cu), which copper content may also be 7 weight percent to 61.5 weight percent, or 21 weight percent to 68.4 weight percent, or 25 weight percent to 55 weight percent;
10 weight percent to 35 weight percent zinc (Zn)
8 weight percent to 15 weight percent manganese (Mn)
0.1 weight percent to 5 weight percent of a metal selected from the group consisting of Indium (In), Gallium (Ga), Tin (Sn) and combinations thereof, the balance being copper and unavoidable impurities, with the proviso that if the silver content is from 35 weight percent to 49 weight percent, the manganese content is more than 8 weight percent, and the percentages of all components adding up to 100 weight percent;
   Or a ninth specific embodiment relates to a brazing filler metal that is free from cadmium and phosphorus and comprises, aside from unavoidable impurities:
5 weight percent to 49 weight percent silver (Ag)
5 weight percent to 68.4 weight percent copper (Cu), which copper content may also be 7 weight percent to 61.5 weight percent, or 21 weight percent to 68.4 weight percent, or 25 weight percent to 55 weight percent;
10 weight percent to 35 weight percent zinc (Zn)
9 weight percent to 12 weight percent manganese (Mn) 0.1 weight percent to 5 weight percent of a metal selected from the group consisting of Indium (In), Gallium (Ga), Tin (Sn) and combinations thereof, the balance being copper and unavoidable impurities, and the percentages of all components adding up to 100 weight percent;
   Or
   a tenth specific embodiment relates to a brazing filler metal that is free from cadmium and phosphorus and comprises, aside from unavoidable impurities:
5 weight percent to 49 weight percent silver (Ag)
5 weight percent to 68.4 weight percent copper (Cu), which copper content may also be 7 weight percent to 61.5 weight percent, or 21 weight percent to 68.4 weight percent, or 25 weight percent to 55 weight percent;
10 weight percent to 35 weight percent zinc (Zn)
6 weight percent to 19 weight percent manganese (Mn) 1 weight percent to 4 weight percent of a metal selected from the group consisting of Indium (In), Gallium (Ga), Tin (Sn) and combinations thereof, the balance being copper and unavoidable impurities, with the proviso that if the silver content is from 35 weight percent to 49 weight percent, the manganese content is more than 8 weight percent, and the percentages of all components adding up to 100 weight percent;
   Or
   An eleventh specific embodiment relates to a brazing filler metal that is free from cadmium and phosphorus and comprises, aside from unavoidable impurities:
5 weight percent to 49 weight percent silver (Ag)
5 weight percent to 68.4 weight percent copper (Cu), which copper content may also be 7 weight percent to 61.5 weight percent, or 21 weight percent to 68.4 weight percent, or 25 weight percent to 55 weight percent;
10 weight percent to 35 weight percent zinc (Zn)
6 weight percent to 19 weight percent manganese (Mn) 1 weight percent to 5 weight percent of at least two metals selected from the group consisting of Indium (In), Gallium (Ga) and Tin (Sn), wherein the metals comprised are being present in an amount of from 0.1 weight percent to 2 weight percent or from 1 weight percent to 2 weight percent. the balance being copper and unavoidable impurities, with the proviso that if the silver content is from 35 weight percent to 49 weight percent, the manganese content is more than 8 weight percent, and the percentages of all components adding up to 100 weight percent.

In a twelfth specific embodiment, the silver content is from 15.5 weight percent to 44 weight percent and the manganese content is from 8 weight percent to 19 weight percent. Thus, in this embodiment the brazing filler metal is free of cadmium and phosphorus, aside from unavoidable impurities and comprises
Copper;
15.5 weight percent to 44 weight percent silver (Ag);
10 weight percent to 35 weight percent zinc (Zn);
8 weight percent to 19 weight percent manganese (Mn);
0.1 weight percent to 5 weight percent of a metal selected from the group consisting of Indium (In), Gallium (Ga), Tin (Sn) and combinations thereof; the balance being copper and unavoidable impurities, with the percentages of all components adding up to 100 weight percent.

To avoid misunderstandings, the above alloy composition must contain copper. The copper content normally is 5 weight percent to 66.4 weight percent, or 10 weight percent to 65 weight percent, or 20 weight percent to 60 weight percent, or 25 weight percent to 55 weight percent or 34.3 weight percent to 52 weight percent.

Silver can also be present in an amount of from 15.5 weight percent to 44 weight percent.

Zinc may also be contained in an amount of from 15 weight percent to 25 weight percent, or in an amount of from 20 weight percent to 25 weight percent.

Manganese can also be present in an amount of from 7 weight percent to 19 weight percent, or from 8 weight percent to 15 weight percent, or from 9 weight percent to 11 weight percent.

The content of metals selected from the group consisting of indium, gallium, tin and combinations thereof may be 1 weight percent to 4 weight percent. As described above, a combination of two or all of the metals indium, gallium and tin might be present in the amounts as described above.

Also, this brazing filler metal may further comprise one or more metals of the group consisting of silicon, antimony, titanium, lithium, germanium, nickel, iron, cobalt or combinations thereof. These metals can optionally be present in an amount of up to 6 weight percent in total of these metals.

Thus, a thirteenth specific embodiment relates to a brazing filler metal that is free from cadmium and phosphorus and comprises:
15.5 weight percent to 44 weight percent silver (Ag)
15 weight percent to 25 weight percent zinc (Zn)
6 weight percent to 19 weight percent manganese (Mn)
0.1 weight percent to 5 weight percent of a metal selected from the group consisting of Indium (In), Gallium (Ga), Tin (Sn) and combinations thereof, the balance being copper and unavoidable impurities, and the percentages of all components adding up to 100 weight percent;
   Or
   a fourteenth specific embodiment relates to a brazing filler metal that is free from cadmium and phosphorus and comprises:
15.5 weight percent to 44 weight percent silver (Ag)
20 weight percent to 25 weight percent zinc (Zn)
6 weight percent to 19 weight percent manganese (Mn) 0.1 weight percent to 5 weight percent of a metal selected from the group consisting of Indium (In), Gallium (Ga), Tin (Sn) and combinations thereof, the balance being copper and unavoidable impurities, with the proviso that if the silver content is from 35 weight percent to 49 weight percent, the manganese content is more than 8 weight percent, and the percentages of all components adding up to 100 weight percent;
   Or
   a fifteenth specific embodiment relates to a brazing filler metal that is free from cadmium and phosphorus and comprises:
15.5 weight percent to 44 weight percent silver (Ag)
10 weight percent to 35 weight percent zinc (Zn)
9 weight percent to 12 weight percent manganese (Mn) 0.1 weight percent to 5 weight percent of a metal selected from the group consisting of Indium (In), Gallium (Ga), Tin (Sn) and combinations thereof, the balance being copper and unavoidable impurities, and the percentages of all components adding up to 100 weight percent;
   Or
   a sixteenth specific embodiment relates to a brazing filler metal that is free from cadmium and phosphorus and comprises:
15.5 weight percent to 44 weight percent silver (Ag)
10 weight percent to 35 weight percent zinc (Zn)
6 weight percent to 19 weight percent manganese (Mn) 1 weight percent to 4 weight percent of a metal selected from the group consisting of Indium (In), Gallium (Ga), Tin (Sn) and combinations thereof, the balance being copper and unavoidable impurities, and the percentages of all components adding up to 100 weight percent;
   Or
   a seventeenth specific embodiment relates to a brazing filler metal that is free from cadmium and phosphorus and comprises, aside from unavoidable impurities:
15.5 weight percent to 44 weight percent silver (Ag) 10 weight percent to 35 weight percent zinc (Zn)
6 weight percent to 19 weight percent manganese (Mn) 1 weight percent to 5 weight percent of at least two metals selected from the group consisting of Indium (In), Gallium (Ga) and Tin (Sn), wherein these metals comprised are being present in an amount of from 0.1 weight percent to 2 weight percent or from 1 weight percent to 2 weight percent each, the balance being copper and unavoidable impurities, and the percentages of all components adding up to 100 weight percent.

In addition, a eighteenth specific embodiment relates to a brazing filler metal that is free from cadmium and phosphorus and comprises:
15.5 weight percent to 44 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent 15 weight percent to 25 weight percent zinc (Zn)
6 weight percent to 19 weight percent manganese (Mn) 0.1 weight percent to 5 weight percent of a metal selected from the group consisting of Indium (In), Gallium (Ga), Tin (Sn) and combinations thereof, and unavoidable impurities, and the percentages of all components adding up to 100 weight percent;
   Or
   a nineteenth specific embodiment relates to a brazing filler metal that is free from cadmium and phosphorus and comprises:
15.5 weight percent to 44 weight percent silver (Ag) 5 weight percent to 66.4 weight percent copper (Cu), which copper content may also be 10 weight percent to 65 weight percent, or 20 weight percent to 60 weight percent, or 25 weight percent to 55 weight percent;
20 weight percent to 25 weight percent zinc (Zn)
6 weight percent to 19 weight percent manganese (Mn) 0.1 weight percent to 5 weight percent of a metal selected from the group consisting of Indium (In), Gallium (Ga), Tin (Sn) and combinations thereof, and unavoidable impurities, and the percentages of all components adding up to 100 weight percent;
   Or
   an twentieth specific embodiment relates to a brazing filler metal that is free from cadmium and phosphorus and comprises:
15.5 weight percent to 44 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
10 weight percent to 35 weight percent zinc (Zn)
8 weight percent to 15 weight percent manganese (Mn) 0.1 weight percent to 5 weight percent of a metal selected from the group consisting of Indium (In), Gallium (Ga), Tin (Sn) and combinations thereof, and unavoidable impurities, and the percentages of all components adding up to 100 weight percent;
   Or
   a twenty-first specific embodiment relates to a brazing filler metal that is free from cadmium and phosphorus and comprises:
15.5 weight percent to 44 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
10 weight percent to 35 weight percent zinc (Zn)
9 weight percent to 12 weight percent manganese (Mn) 0.1 weight percent to 5 weight percent of a metal selected from the group consisting of Indium (In), Gallium (Ga), Tin (Sn) and combinations thereof, and unavoidable impurities, and the percentages of all components adding up to 100 weight percent;
   Or
   a twenty-second specific embodiment relates to a brazing filler metal that is free from cadmium and phosphorus and comprises: 15.5 weight percent to 44 weight percent silver (Ag)
5 weight percent to 66.4 weight percent copper (Cu), which copper content may also be 10 weight percent to 65 weight percent, or 20 weight percent to 60 weight percent, or 25 weight percent to 55 weight percent;
10 weight percent to 35 weight percent zinc (Zn)
6 weight percent to 19 weight percent manganese (Mn) 1 weight percent to 4 weight percent of a metal selected from the group consisting of Indium (In), Gallium (Ga), Tin (Sn) and combinations thereof, and unavoidable impurities, and the percentages of all components adding up to 100 weight percent;
Or

A twenty-third specific embodiment relates to a brazing filler metal that is free from cadmium and phosphorus and comprises:
15.5 weight percent to 44 weight percent silver (Ag) 5 weight percent to 66.4 weight percent copper (Cu), which copper content may also be 10 weight percent to 65 weight percent, or 20 weight percent to 60 weight percent, or 25 weight percent to 55 weight percent;
10 weight percent to 35 weight percent zinc (Zn)
6 weight percent to 19 weight percent manganese (Mn) 1 weight percent to 5 weight percent of at least two metals selected from the group consisting of Indium (In), Gallium (Ga) and Tin (Sn), wherein the metals comprised are being present in an amount of from 0.1 weight percent to 2 weight percent or from 1 weight percent to 2 weight percent and unavoidable impurities, and the percentages of all components adding up to 100 weight percent.

The brazing filler metals can be attained by liquid phase alloying or mechanical alloying. One common way is by melting. The brazing filler metals of the present patent application can be made by melting the appropriate amounts of the metals. It is also possible to employ alloys as educts, e.g. to use an alloy consisting of silver, copper and zinc and to supplement the alloy with appropriate amounts of manganese and tin or an alloy thereof and melting of this combination. The melting can be done in inert gas atmosphere, such as argon or nitrogen, or in air. Gas, electric and induction furnaces are, amongst others, suitable means to provide the necessary heating. The molten alloy can be cast into a mold, atomized or granulated to obtain a powder or granules. Atomized powder may be used for making brazing pastes. The powders as well as the granules may be used for pressing and extrusion as described below. In this way, also powders and granules can be employed to obtain punching stamped parts, wires or rods.

Melting can thus also be followed by production techniques such as ingot casting, continuous casting, melt spinning, alloy granulation or atomization.

The ingot may also be used for extruding the brazing filler metal in the shape of a wire or ribbon.

The geometry of the semi-finished products can be adjusted to customers demand by extrusion, pressing, forging, wire drawing, hot or cold rolling, straightening, cutting or punching or combinations thereof.

Continuous casting is also an option for obtaining wires, ribbons or rods.

Moreover, rolling to obtain sheet metal from the brazing filler metal, wire drawing or manufacture of shaped articles such as rings or punching stamped parts can be applied to obtain the brazing filler metal in the desired shape.

The brazing filler metal can also be used for Sandwich brazing filler metals or Sandwich brazing alloys or tri-ply or trifoil, which are all synonyms for a metal ribbon covered with layers of brazing filler metal on both of its sides, which are known in the art.

It is also known in the art how such sandwich brazing filler metals can be made, for example by hot roll cladding or roll cladding, Composite casting, which basically is a technique wherein the molten brazing filler metal is applied onto a metal ribbon and allowed to solidify or roller coating, wherein a paste or suspension of a brazing filler metal powder is being applied onto a metal ribbon and heat treated to effect evaporation and burning off solvents and organic constituents and sintering or melting of the brazing powder.

In Figure 1, the structure of such a sandwich brazing filler metal is depicted. A metal ribbon 3 carries a first brazing filler metal 1 and a second brazing filler metal 2 on both sides of the metal ribbon. Both as the first brazing filler metal 1 and as the second brazing filler metal 2 a brazing filler metal as described herein may be employed. It is also possible that the first brazing filler metal 1 and the second brazing filler metal 2 are different from each other and each may be a brazing filler metal as described herein. In the alternative, one of the brazing filler metal can also be a brazing filler metal of the prior art as long as the other one is a brazing filler metal as described.

The metal ribbon can be made of any metal suitable for this purpose, like steel, iron, copper, Nickel and their alloys but other metals can be suitable as well. Copper ribbon is commonly used in sandwich brazing filler metals as the metal ribbon. The thickness of the metal ribbon can be expressed by the ratio of the thickness of the metal ribbon versus the thickness of a single layer of the brazing filler metal. Typical ratios are 4:1, 1:1, 2:1, 1:0.85, 1:0.28. Overall Thickness of such a sandwich brazing filler metal may vary by the technical requirements of the application and can typically provided in thicknesses of 0.1 mm to 1.5 mm or 0.2 mm to 1.2 mm.

The brazing filler metal is suitable for brazing of metal parts, such as parts made of steel, stainless steels, copper and its alloys (i.e. brass) or nickel and its alloys, to parent materials that are usually made of steel, stainless steels, copper and its alloys (i.e. brass) or nickel and its alloys. Examples for applications are heat exchangers, compressors, heat pumps. Thus the present patent application also relates to the use of the brazing filler metals for brazing parts made of steel, stainless steels, copper and its alloys (i.e. brass) or nickel and its alloys or combinations thereof to a parent material made of steel, stainless steels, copper and its alloys (i.e. brass) or nickel and its alloys or combinations thereof.

The brazing filler metals are also suitable for brazing contact materials, such as nickel-chromium alloys, Copper-Chromium alloys, copper or silver composite materials, to parent materials made of, for example, copper and its alloys (i.e. brass) or steel. Consequently, the present patent application also relates to the use of the brazing filler metals for brazing nickel-chromium alloys, Copper-Chromium alloys, copper or silver composite materials to parent materials made of brass, copper, steel or combinations thereof.

The brazing filler metals are also suitable for brazing of hard metals. Hard metals are made of a hard material such as tungsten carbide, WC, often in the form of a powder that has been infiltrated by a binder metal like iron, nickel, cobalt or alloys thereof. In such applications, usually steel, hard metal, diamond, diamond segments or poly crystalline diamonds are joined with hard metal. Such brazing can be used for making hard metal saw blades, milling tools, drill bits or medical instruments.

The present patent application thus also relates to the use of the brazing filler metals for brazing hard metals to steel (especially tool steel), hard metals, diamond or combinations thereof and also to the use of the brazing filler metals for making hard metal saw blades, milling tools, drill bits or medical instruments as well as hard metal saw blades, milling tools, drill bits or medical instruments obtained in that way.

The brazing of steel is often employed for hydraulic tubes and brake pipes. The brazing filler metals are also suitable for other materials and applications, such as brazing of stainless steel, for example spectacle frames.

In general, known fluxes suitable for the materials mentioned above can be used in the form of pastes, laquers, powders or coating of the brazing filler metal e.g. in the shape of wires or rods. Such suitable fluxes are, for example, FH10, FH11 and FH12, which are disclosed in standard DIN EN 1045. Consequently, this patent application also relates to shaped articles made of any of the brazing filler metals in combination with fluxes. These can be in the shape of wires or rods. The shaped articles made of any of the brazing filler metals can be coated with a flux. More specifically, shaped articles made of any of the brazing filler metals in the form of rods or wires may be coated by a flux selected from FH10, FH11 or FH12 as defined in standard DIN EN 1045.

The brazing with the brazing filler metal of the present patent application can be carried out as set out in the following method for joining metal parts by brazing, comprising the steps of
- Providing a parent material;
- Providing a part that is to be connected to the parent material;to be discussed
- Arranging the parent material and the part to one another in a way suitable for brazing;
- Arranging a brazing filler metal of the present patent application or a combination of it with a flux in contact to the parent material, the part or both in a way suitable for brazing;
- Heat treating the arrangement at a temperature sufficient to effect brazing to obtain a joined part;
- Cooling the joined part.

The part to be brazed can be made of various materials described above, for example steel, stainless steels, copper and its alloys (i.e. brass), nickel and its alloys, nickel-chromium alloys, Copper-Chromium alloys, copper or silver composite materials, hard metals. The parent material can, for example, be selected from steel, stainless steels, tool steel, copper and its alloys (i.e. brass), nickel and its alloys, hard metals, diamond or combinations thereof. Both the part and the parent material may have various shapes and dimensions that can be the same or different from each other. The composition of material they are made of is described above. Possible shapes both for the parent material and the part are, amongst others, tubular, flat or angular. It is also possible to employ various numbers of the part and the parent material, so that for example several parts, like e.g. a number of tubes, can be joined with one parent material, such as e.g. a perforated metal sheet, or vice versa. These are arranged in contact with each other in such a way that they can be joined by brazing. A brazing filler metal, which can be in combination with a flux, is arranged on the parent material, the part or both. This can be done prior to providing them, e.g. by applying a paste containing a brazing filler metal of the present patent application to each or both of them, or it can be applied continuously during the heat treatment step or it can be placed on the parent material or the part e.g. as a ring made of a wire of the brazing filler metal of the present patent application. The flux can be applied prior or simultaneously with the brazing filler metal. A rod made of the brazing filler metal of the present patent application coated with a flux is a possible means for simultaneous application of the flux with the brazing filler metal, but the part, the parent material or both can be provided with the flux before as well, e.g. by applying a liquid containing the flux.

Heat treatment can be done by heating with a flame, in a furnace, by means of induction or in another way. Inert gas such as carbon dioxide, nitrogen or argon can be applied as considered useful, but brazing may as well be carried out in air or in vacuum. After the heat treatment step the joined parts are allowed to cool. The present patent application thus also relates to the method for joining metal parts as described above and to the brazed article obtained by such a method.

### Examples

Alloys have been obtained by providing the single metals in a crucible and molten in an induction furnace, cast into a graphite mold. These samples were used for the assessment of the produced alloys.

| Examples | | **Cold deformability** | **Liquidus temperature** | **Wetting/Flow behaviour on steel** |
|---|---|---|---|---|
| 1 | Cu-Ag45-Zn20-Mn10-In2 | ++ | TL ≈ TL(Ag155) | + |
| 2 | Cu-Aq45-Zn20-Mn10-In3 | ++ | TL ≈ TL(Ag155) | + |
| 3 | Cu-Ag45-Zn20-Mn10-Sn2 | ++ | TL ≈ TL(Ag155) | + |
| 4 | Cu-Ag45-Zn20-Mn10-Sn3 | + | TL ≈ TL(Ag155) | + |
| 5 | Cu-Ag45-Zn20-Mn10-Sn2-Si0.3 | ++ | TL ≈ TL(Ag155) | ++ |
| 6 | Cu-Ag45-Zn20-Mn10-Sn2-In2 | ++ | TL ≈ TL(Ag155) | + |
| 7 | Cu-Ag35-Zn20-Mn10-In3 | ++ | TL ≈ TL(Ag145) | + |
| 8 | Cu-Ag35-Zn20-Mn10-In2 | ++ | TL ≈ TL(Ag145) | + |
| 9 | Cu-Ag35-Zn20-Mn10-Sn2-Si0.4 | ++ | TL ≈ TL(Ag145) | ++ |
| 10 | Cu-Ag35-Zn20-Mn10-Sn2-Si0.3 | ++ | TL ≈ TL(Ag145) | ++ |
| 11 | Cu-Ag35-Zn20-Mn10-Sn2-Si0.2 | ++ | TL ≈ TL(Ag145) | ++ |
| 12 | Cu-Ag34-Zn20-Mn10-Sn2-In1 | ++ | TL ≈ TL(Ag145) | + |
| 13 | Cu-Ag35-Zn20-Mn10-Sn3 | + | TL ≈ TL(Ag145) | + |
| 14 | Cu-Ag24-Zn25-Mn10-Sn2 | + | TL ≈ TL(Ag134) | + |
| 15 | Cu-Ag23-Zn20-Mn10-Sn2-In2 | ++ | TL ≈ TL(Ag134) | + |
| 16 | Cu-Ag24-Zn20-Mn10-Sn2-Si0.4 | ++ | TL ≈ TL(Ag134) | ++ |
| 17 | Cu-Ag24-Zn20-Mn10-Sn2-Si0.3 | ++ | TL ≈ TL(Ag134) | ++ |
| 18 | Cu-Ag24-Zn20-Mn10-Sn2-Si0.2 | ++ | TL ≈ TL(Ag134) | ++ |
| 19 | Cu-Ag24-Zn20-Mn10-Sn2-Ti0.5 | + | TL ≈ TL(Ag134) | ++ |
| 20 | Cu-Ag16-Zn20-Mn10-Sn2 | + | TL ≈ TL(Ag225) | + |
| 21 | Cu-Ag16-Zn20-Mn10-Ga2-Si0.3 | + | TL ≈ TL(Ag225) | + |
| 22 | Cu-Ag16-Zn20-Mn10-Sn2-Si0.3 | + | TL ≈ TL(Ag225) | + |
| 23 | Cu-Ag16-Zn20-Mn10-Ga2 | ++ | TL ≈ TL(Ag225) | + |

### Comparative Examples

| | | | | |
|---|---|---|---|---|
| 1 | Cu-Ag45-Zn20-Mn10-Sn7 | - | TL < TL(Ag155) | + |
| 2 | Cu-Ag45-Zn20-Mn10-In7 | - | TL < TL(Ag155) | **O** |
| 3 | Cu-Ag45-Zn20-Mn20-Sn2 | **O** | TL > TL(Ag155) | - |
| 4 | Cu-Ag45-Zn20-Mn3-Sn2 | ++ | TL >> TL(Ag155) | ++ |
| 5 | Cu-Ag45-Zn40-Mn10-Sn2 | - | TL < TL(Ag155) | + |
| 6 | Cu-Ag45-Zn5-Mn10-Sn2 | ++ | TL >> TL(Ag155) | + |
| 7 | Cu-Ag45-Zn20-Mn10 | ++ | TL > TL(Ag155) | + |
| 8 | Cu-Ag35-Zn20-Mn10-Sn7 | - | TL < TL(Ag145) | + |
| 9 | Cu-Ag35-Zn20-Mn10-In7 | - | TL < TL(Ag145) | **O** |
| 10 | Cu-Ag35-Zn20-Mn20-Sn2 | **O** | TL > TL(Ag145) | - |
| 11 | Cu-Ag35-Zn20-Mn3-Sn2 | ++ | TL >> TL(Ag145) | ++ |
| 12 | Cu-Ag35-Zn40-Mn10-Sn2 | - | TL < TL(Ag145) | + |
| 13 | Cu-Ag35-Zn5-Mn10-Sn2 | ++ | TL >> TL(Ag145) | + |
| 14 | Cu-Ag35-Zn20-Mn10 | ++ | TL > TL(Ag145) | + |
| 15 | Cu-Ag24-Zn20-Mn10-Sn7 | - | TL < TL(Ag134) | + |
| 16 | Cu-Ag24-Zn20-Mn10-In7 | - | TL < TL(Ag134) | **O** |
| 17 | Cu-Ag24-Zn20-Mn20-Sn2 | **O** | TL > TL(Ag134) | - |
| 18 | Cu-Ag24-Zn20-Mn3-Sn2 | ++ | TL >> TL(Ag134) | ++ |
| 19 | Cu-Ag24-Zn40-Mn10-Sn2 | - | TL < TL(Ag134) | + |
| 20 | Cu-Ag24-Zn05-Mn10-Sn2 | ++ | TL >> TL(Ag134) | + |
| 21 | Cu-Ag24-Zn20-Mn10 | ++ | TL > TL(Ag134) | + |
| 22 | Cu-Ag16-Zn20-Mn10-Sn7 | - | TL < TL(Ag225) | + |
| 23 | Cu-Ag16-Zn20-Mn10-In7 | - | TL < TL(Ag225) | **O** |
| 24 | Cu-Ag16-Zn20-Mn20-Sn2 | **O** | TL > TL(Ag225) | - |
| 25 | Cu-Ag16-Zn20-Mn3-Sn2 | ++ | TL >> TL(Ag225) | ++ |
| 26 | Cu-Ag16-Zn20-Mn10 | ++ | TL > TL(Ag225) | + |

Cold deformability of the alloy was judged based on repeated deformation during cold rolling. Assessment was done by repeated rolling passes with a thickness reduction of 1 mm per pass without annealing until rupture of the sample was observed. The result is given in the Examples and Comparative Examples.

Wetting and flow behavior was judged based on a test where a 1 mm sheet made of steel or copper was placed on a 1mm sheet made of steel or copper orthogonally, a flux was applied to the joint and a wire made of the brazing filler metal was placed next to the joint and this arrangement was placed into a furnace for two minutes at various temperatures. The wetting and flow behavior at various temperatures and substrate materials were rated.

The ratings have the following meaning:

| | |
|---|---|
| ++ | very good |
| + | good |
| 0 | Bad |
| - | not acceptable |

Liquidus temperature was given relative to standardized brazing alloys disclosed in standard DIN EN ISO 17672. TL is the liquidus temperature of the respective brazing filler metal in the Examples and Comparative Examples, TL(AgXXX) is the liquidus temperature of the silver brazing filler metal with the identifier Ag and the number XXX in standard DIN EN ISO 17672.
≈ Liquidus temperature is 15°C higher or lower than corresponding standardized brazing filler metal
< Liquidus temperature is more than 15°C lower than corresponding standardized brazing filler metal
> Liquidus temperature is 15°C to 30 °C higher than corresponding standardized brazing filler metal
» Liquidus temperature is more than 30 °C higher than corresponding standardized brazing filler metal

## Claims

1. A brazing filler metal that is free from cadmium and phosphorus, aside from unavoidable impurities, comprising copper, from 15.5 weight percent to 49 weight percent silver, from 10 weight percent to 35 weight percent zinc, from 6 weight percent to 19 weight percent manganese, from 0.1 weight percent to 5 weight percent of at least one metal selected from the group consisting of Indium, Gallium, Tin and combinations thereof, the balance being copper and unavoidable impurities, with the proviso that if the silver content is from 35 weight percent to 49 weight percent, the manganese content is more than 8 weight percent.

2. The brazing filler metal of claim 1 comprising 15 weight percent to 25 weight percent of zinc.

3. The brazing filler metal of claim 1 or 2 comprising 7 weight percent to 15 weight percent of manganese.

4. The brazing filler metal of any of claims 1 to 3 comprising 15.5 weight percent to 44 weight percent silver.

5. The brazing filler metal of any of claims 1 to 4 comprising from 8 weight percent to 19 weight percent of manganese.

6. The brazing filler metal of any of claims 1 to 5 comprising 1 weight percent to 4 weight percent of a metal selected from the group consisting of Indium, Gallium, Tin and combinations thereof.

7. The brazing filler metal of any of claims 1 to 6, wherein the unavoidable impurities collectively do not exceed an amount of 0.5 weight percent.

8. The brazing filler metal of any of claims 1 to 7, further comprising a metal of the group consisting of silicon, antimony, palladium, gold, iridium, rhodium, ruthenium, Osmium, platinum, titanium, lithium, germanium, nickel, iron, cobalt or combinations thereof.

9. The brazing filler metal of any of claims 1 to 8, further comprising silicon in an amount of up to 1 weight percent.

10. A sandwich brazing filler metal, comprising a brazing filler metal according to any of the preceding claims.

11. Use of the brazing filler metals according to any of the preceding claims for brazing parts made of steel, stainless steels, copper and its alloys (i.e. brass), nickel and its alloys, nickel-chromium alloys, Copper-Chromium alloys, copper or silver composite materials, hard metals or combinations thereof to a parent material made of steel, stainless steels, tool steel, copper and its alloys (i.e. brass), nickel and its alloys, hard metals, diamond or combinations thereof.

12. Use of the brazing filler metals according to any of the preceding claims for making hard metal saw blades, milling tools, drill bits, contact materials or medical instruments, heat exchangers, or compressors.

13. A combination of a brazing filler metals according to any of the preceding claims with a flux.

14. A method for joining metal parts by brazing, comprising the steps of
- Providing a parent material;
- Providing a part that is to be connected to the parent material;
- Arranging the parent material and the part to one another in a way suitable for brazing;
- Arranging a brazing filler metal of any of claims 1 to 9 or a combination of claim 12 in contact to the parent material, the part or both in a way suitable for brazing;
- Heat treating the arrangement at a temperature sufficient to effect brazing to obtain a joined part;
- Cooling the joined part.

15. A brazed article obtainable according to a method of claim 13.
